# EUROPÄISCHE PATENTSCHRIFT

(11) **EP 0 842 902 B1**
(45) Veröffentlichungstag und Bekanntmachung des Hinweises auf die Patenterteilung: **24.01.2001**
(21) Anmeldenummer: 97119921.1
(22) Anmeldetag: 13.11.1997
(51) Int. Cl.: C02F 3/12, C02F 3/06, C02F 3/30, C02F 3/10

(54) **Verfahren zur Reinigung von feststoffhaltigen Flüssigkeiten**
Process for purifying liquids containing solids
Procédé pour purifier des liquides contenant des particules solides

(30) Priorität: 14.11.1996 DE 19647164
(43) Veröffentlichungstag der Anmeldung: 20.05.1998
(73) Patentinhaber: VA TECH WABAG GmbH, 1211 Wien (AT)
(72) Erfinder: Fuchs, Uwe, 80689 München (DE)
(74) Vertreter: Rieberer, Stefan, Dipl.-Ing.

(56) Entgegenhaltungen:
- EP-A- 0 347 296
- DE-C- 4 331 434
- US-A- 4 322 296

## Beschreibung

Die Erfindung betrifft ein Verfahren gemäß dem Oberbegriff von Anspruch 1.

Bei Verfahren zur Filtration von feststoffhaltigen Abwässern sind z. B. sogenannte Sandfilter bekannt, bei denen eine in einem Behälter angeordnete Sandschicht vertikal vom Abwasser durchströmt wird. Außer Sand werden neuerdings auch andere Filterteilchen, z. B. Schaumstoffteilchen, zur Ausbildung eines von der Flüssigkeit durchströmten Filterbettes verwendet. In jüngster Zeit erfahren sogenannte Biofilter eine größere Verbreitung, in denen sowohl Filtrationsvorgänge als auch biologische Abbauvorgänge ablaufen. Bei diesen Biofiltern wird Luft oder ein anderes sauerstoffhaltiges Gas zur Anregung aerober biologischer Abbauprozesse in das Filterbett eingeblasen. Dadurch wird allerdings der Filtrationsvorgang beeinträchtigt. Eine Regeneration des Filterbettes ist bei herkömmlichen Filtrationsverfahren darüber hinaus energieaufwendig und macht komplizierte Regenerierschritte erforderlich. Bei vertikaler Durchströmung des Filterbetts bewirken außerdem die abgeschiedenen Feststoffe eine Kontraktion des Filterbettes. Dadurch verschlechtert sich das Filtrationsergebnis während der Betriebsdauer beträchtlich.

Die EP 347 296 zeigt ein gattungsgemäßes Verfahren, welches die Verwendung von kugelförmigen Filterteilchen oder Filterteilchen mit zylindrischer Linsenform vorschlägt. Aus der DE 43 31 434 C1 und der US 4 322 296 sind ähnliche Verfahren bekannt, wobei hier jedoch zur Verwirbelung eine Rezirkulation von Flüssigkeit nötig ist sowie Teilchen mit einem Gewicht von größer 1 g/ml eingesetzt werden.

Der vorliegenden Erfindung liegt die Aufgabe zugrunde, ein Verfahren der eingangs genannten Art so auszugestalten, dass auf wirtschaftliche Weise eine hohe Reinigungsleistung erzielt wird, ohne dass die bekannten Nachteile bekannter Verfahren auftreten.

Diese Aufgabe wird erfindungsgemäß dadurch gelöst, dass Filterteilchen mit flächiger folienähnlicher Struktur verwendet werden. Dabei wird folgender Effekt genutzt: Ab einer gewissen Flächenbeschickung baut sich in einer strömungsarmen Zone vor der Rückhalteeinrichtung eine ruhende, gut durchlässige Filterschicht auf, in der z. B. Feststoffe mit hoher Filterkapazität zurückgehalten werden, ohne dass die üblicherweise als Sieb oder Lochblech ausgebildete Rückhalteeinrichtung von den Filterteilchen verlegt wird, was durch die erfindungsgemäße Lösung erreicht wird. In der vorgeschalteten Wirbelzone findet aufgrund der Wirbelströmung eine starke Durchmischung der zu reinigenden Flüssigkeit statt. Darüber hinaus bietet die vorgeschaltete Wirbelzone die Möglichkeit einer gleichzeitigen biologischen Behandlung der Flüssigkeit. Hierzu kann beispielsweise in die Wirbelzone ein sauerstoffhaltiges Gas, z.B. Luft oder technisch reiner Sauerstoff, eingeblasen werden. Dadurch werden in der Wirbelzone aerobe biologische Abbauprozesse induziert.

Anders als bei üblichen Raumfiltern wird die Filterschicht vorzugsweise horizontal von der Flüssigkeit durchströmt. Dadurch wird einerseits das Risiko einer Verlegung der Rückhalteeinrichtung sowie einer zu schnellen Verstopfung der Filterschicht vermindert und andererseits eine biologische Behandlung der Flüssigkeit erleichtert. Während bei den üblichen vertikal durchströmten Filtern der Filtrationsvorgang durch die für die biologische Behandlung notwendige Begasung der Flüssigkeit beeinträchtigt wird, wird beim erfindungsgemäßen Vefahren bei horizontaler Durchströmung der Filterschicht der Filtrationsvorgang durch die Begasung der vorgeschalteten Wirbelzone in keiner Weise gestört.

Durch die Vorschaltung einer Wirbelzone vor die Filterschicht wird außerdem die Regeneration der Filterschicht wesentlich erleichtert. Hierzu muß nämlich lediglich der Zulauf und der Ablauf des Behälters abgesperrt werden, während die Wirbelzone weiterhin betrieben wird. Dadurch löst sich die stationäre Filterschicht von selbst ab und wird in der Wirbelzone in Einzelteilchen verwirbelt, wobei die gespeicherten Feststoffe freigesetzt werden. Anschließend wird die feststoffangereicherte Suspension vom Boden des Behälters abgelassen. Schließlich werden der Zulauf und der Ablauf des Behälters wieder geöffnet, wodurch der Behälter sich wieder mit Flüssigkeit füllt. Dabei kommt es zu einer selbstständigen Ausbildung einer frischen Filterschicht. Zur Ausbildung einer stationären Filterschicht wird zweckmäßigerweise eine Flächenbeschickung der Flüssigkeit von mindestens 5 m/h, vorzugsweise ca. 5 bis ca. 50 m/h, eingestellt.

Vorzugsweise wird ein Verhältnis des Volumens der Wirbelzone zum Volumen der strömungsarmen Zone von ca. 1 bis ca. 10 eingestellt. Je nach Teilchenkonzentration und dem eingestellten Verhältnis der Wirbelzone zur strömungsarmen Zone kann die Wirbelzone zu verschiedenen Zwecken genutzt werden. Beispielsweise kann die Wirbelzone als Nitrifikationszone zur biologischen Nitrifikation von Abwasser eingesetzt werden. Hierzu muß die Wirbelzone mit einem sauerstoffhaltigen Gas begast werden.

Falls die Wirbelzone als Bioreaktor genutzt werden soll, werden vorzugsweise Trägerteilchen als Aufwuchsflächen für Biomasse in der Flüssigkeit der Wirbelzone suspendiert. Hierfür können z.B. Schaumstoffteilchen oder folienartige Teilchen verwendet werden. Besonders bevorzugt werden als Aufwuchsflächen für die Biomasse in der Wirbelzone Teilchen verwendet, die den in der strömungsarmen Zone eingesetzten Filterteilchen gleichartig sind. Während des Betriebs kann es so zu einem Austausch von Teilchen kommen, so daß Teilchen aus der Wirbelzone in die strömungsarme Zone wechseln und umgekehrt.Beim Einsatz der Wirbelzone zur Nitrifikation einer Flüssigkeit, z.B. von Abwasser, ist es ferner empfehlenswert, eine Kohlenstoffquelle zur Denitrifikation in die strömungsarme Zone einzuführen. Auf diese Weise wird eine besonders umfassende Reinigung der Flüssigkeit erreicht. In der Wirbelzone findet eine Nitrifikation und gegebenenfalls ein Kohlenstoffabbau der Flüssigkeit statt. In der strömungsarmen Zone, in der die Filterschicht sich ausbildet, wird die Flüssigkeit denitrifiziert und von Feststoffteilchen befreit. Den Behälter verläßt schließlich weitgehend gereinigte Flüssigkeit. Daher eignet sich das erfindungsgemäße Verfahren insbesondere für eine weitergehende Abwasserreinigung oder für eine Trinkwasseraufbereitung.

Das Verhältnis von Wirbelzone zu strömungsarmer Zone kann in der Praxis z.B. durch Verschieben eines zwischen den beiden Zonen angeordneten Leitblechs erfolgen. Das Leitblech hat die Aufgabe, die Wirbelströmung von der strömungsarmen Zone fernzuhalten. Hierzu reicht es aus, wenn das Leitblech an einer Stelle angeordnet ist, die eine Umlenkung der Strömungsrichtung der Wirbelströmung in geeigneter Weise bewirkt.

Zur Aufrechterhaltung der Wirbelströmung der Wirbelzone wird bevorzugt ein Gas in die Wirbelzone eingeleitet. Falls die Wirbelzone als Bioreaktor zum aeroben Abbau von Flüssigkeitsinhaltsstoffen genutzt werden soll, wird zweckmäßigerweise das hierfür notwendige sauerstoffhaltige Gas in der Weise in die Wirbelzone eingeleitet, daß in der Wirbelzone eine Wirbelströmung entsteht. Zusätzlich oder alternativ kann auch der Flüssigkeitszulauf über Strahl- oder Injektorbelüfter in die Wirbelzone eingespeist werden, um eine Wirbelströmung in der Wirbelzone zu bewirken.

Gemäß der Erfindung werden Filterteilchen mit flächiger, folienähnlicher Struktur verwendet. Insbesondere ist der Einsatz von im wesentlichen planaren Teilchen mit einer Dicke von ca. 5 µm bis ca. 1.500 µm, vorzugsweise 15 µm bis ca. 500 µm, und einer Fläche von ca. 5(mm)² bis ca. 1.000(mm)² vorteilhaft. Eine weitere Steigerung der Filtrationseigenschaften wird durch Verwendung von Filterteilchen erreicht, die an der Oberfläche ein thermisch geglättetes Vließmaterial mit einer Mikro-Restvließstruktur aufweisen. Solche thermisch geglättete Vliese sehen makroskopisch betrachtet wie eine herkömmliche undurchsichtige Kompaktfolie aus, besitzen jedoch eine Mikro-Restvliesstruktur mit Verästelungen und Durchtrittsöffnungen. Diese Struktur bewirkt, daß die Filterteilchen auch bei Anwendung ständiger Scherkräfte ihre mechanische Stabilität bewahren und gleichzeitig eine große reaktive Oberfläche bieten. Besonders bevorzugt werden Filterteilchen eingesetzt, die an der Oberfläche ein thermisch geglättetes Vließmaterial aufweisen, welches filamentöse Verästelungen mit Filamentdurchmessern im Bereich von 5 bis 500 µm und Durchtrittsöffnungen von 1 bis 1.000 µm besitzt.

Die vorliegende Erfindung eignet sich zur Reinigung aller denkbaren feststoffhaltigen Flüssigkeiten, insbesondere zur Reinigung von Abwasser oder Trinkwasser. Das Verfahren ist aber auch zur Reinigung von Waschwasser aus einer biologischen oder physikalisch-chemischen Abgaswäsche geeignet. Mit dem erfindungsgemäßen Verfahren können ebenso verunreinigtes Grundwasser und aufgeschlämmtes Bodenmaterial aus Altlasten gereinigt werden. Dabei kann das Verfahren als reines Filtrationsverfahren oder als Biofiltrationsverfahren betrieben werden. Wird die Wirbelzone als Bioreaktor genutzt, so ist beispielsweise eine besonders weitgehende Reinigung von Abwässern möglich. Die Biofiltrationseinheit kann besonders kompakt ausgebildet werden, da sowohl der biologische Abbau von Abwasserinhaltsstoffen als auch die Filtration des Abwassers in einem Behälter möglich sind.

Wesentliche Vorteile des erfindungsgemäßen Verfahrens bestehen in einem verminderten Risiko, daß die Rückhalteeinrichtung verlegt wird und die Filterschicht frühzeitig verstopft, sowie in einer sehr einfachen Regenerierbarkeit der Filterschicht.

Im folgenden wird die Erfindung an Hand von in den Figuren schematisch dargestellten Ausführungsbeispielen näher erläutert:

### Es zeigen:

- Figur 1: eine Filtrationseinheit mit horizontal durchströmter Filterschicht
- Figur 2: ein Biofilter mit horizontal durchströmter Filterschicht
- Figur 3: ein Biofilter mit vertikal durchströmter Filterschicht

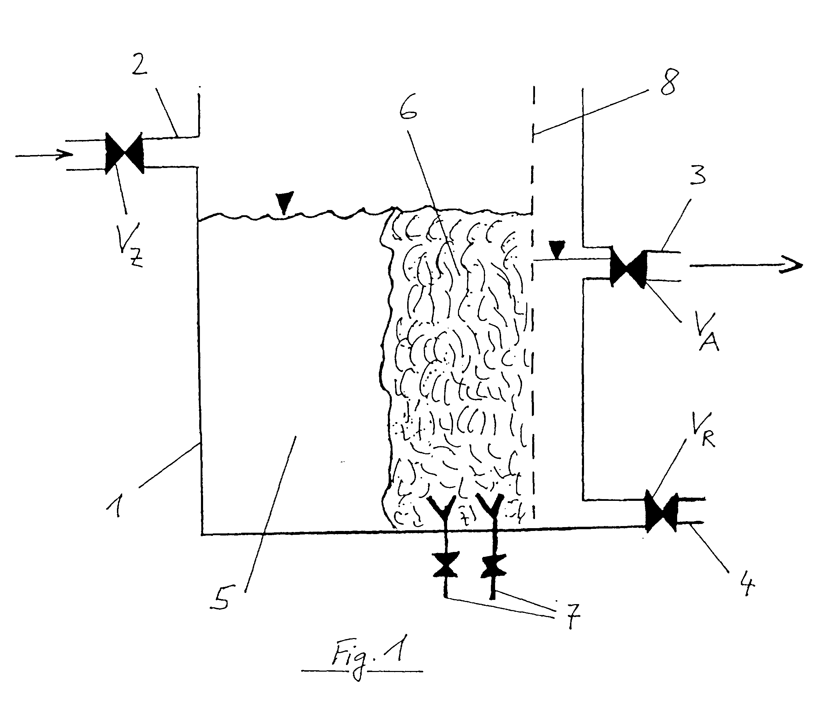

Die in Figur 1 dargestellte Filtrationseinheit dient zur Reinigung einer feststoffhaltigen Flüssigkeit, insbesondere Abwasser oder Trinkwasser, die über einen Zulauf 2 in einen Behälter 1 eingefüllt wird. Als Filtermedium werden Teilchen mit einem spezifischen Gewicht von höchstens 1 g/ml, vorzugsweise 0,8 bis 1 g/ml, in den Behälter 1 eingegeben. Bevorzugt werden Filterteilchen mit flächiger, folienähnlicher Struktur verwendet. Die Filterteilchen werden mittels einer als Lochblech 8 ausgebildeten Rückhalteeinrichtung vom Ablauf 3 des Behälters 1 zurückgehalten. Im Behälter 1 wird eine Wirbelströmung der Flüssigkeit beispielsweise durch Einblasen von Gas induziert. Bei schwacher Begasungsintensität baut sich schon ab einer Flächenbeschickung mit der Flüssigkeit von 5 m/h in einer strömungsarmen Zone vor dem Lochblech 8 eine ruhende, gut durchlässige Filterschicht auf, in der Feststoffe mit hoher Filterkapazität zurückgehalten werden, ohne daß das Lochblech 8 verlegt wird. Zur Regenerierung der Filterschicht werden der Flüssigkeitszulauf 2 und der Flüssigkeitsablauf 3 mittels Ventilen V_{Z} und V_{A} abgesperrt. Die Wirbelströmung der Flüssigkeit in der Wirbelzone wird aufrechterhalten. Durch den fehlenden Sog am Rückhaltesieb löst sich die stationäre Filterschicht 6 selbständig ab und wird in der Wirbelzone 5 in Einzelteilchen verwirbelt, wobei die gespeicherten Feststoffe freigesetzt werden. Anschließend wird die feststoffangereicherte Suspension über einen Bodenabzug 4 nach Öffnen eines Ventils V_{R} abgelassen. Zur Wiederaufnahme des Filtrationsbetriebs wird V_{R} wieder geschlossen und werden die Ventile V_{Z} sowie V_{A} wieder geöffnet. Die vor der Regeneration der Filterschicht eingestellten Strömungsbedingungen werden wieder hergestellt, so daß es zu einer selbstständigen Ausbildung einer frischen Filterschicht 6 kommt.

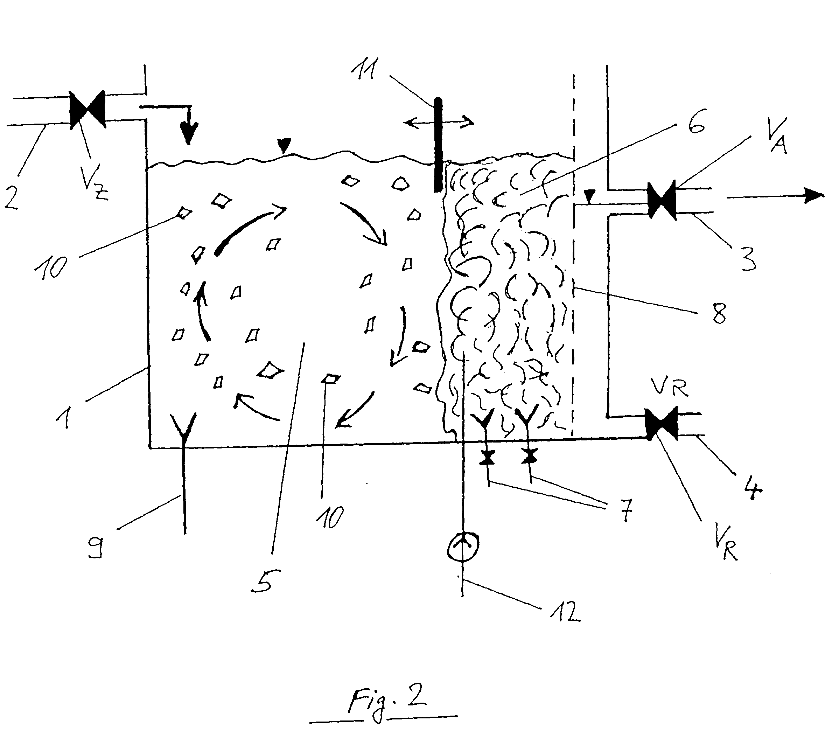

Die in Figur 2 dargestellte Filtrationseinheit unterscheidet sich von der in Figur 1 gezeigten im wesentlichen dadurch, daß die Wirbelzone 5 als Bioreaktor betrieben wird. Im übrigen sind die selben Anlagenteile mit den selben Bezugsziffern bezeichnet wie in Figur 1.

Um die Wirbelzone 5 als Bioreaktor betreiben zu können, wird über Leitung 9 Luft in die Wirbelzone eingeblasen. Dadurch wird einerseits die gewünschte Wirbelströmung in der Wirbelzone aufrechterhalten, andererseits wird der für aerobe biologische Abbauvorgänge notwendige Sauerstoff der Flüssigkeit zugeführt. Außerdem werden in die Wirbelzone Trägerteilchen 10 als Aufwuchsflächen für Biomassen zugegeben. Als Trägerteilchen 10 können beispielsweise Schaumstoffteilchen oder folienartige Teilchen verwendet werden. Falls die zu reinigende Flüssigkeit stickstoffhaltiges Abwasser darstellt, können in der Wirbelzone aerobe Nitrifikationsvorgänge durchgeführt werden. In die Filterschicht 6 wird eine Kohlenstoffquelle über eine Zuleitung 12 zugeführt. Dadurch wird eine Denitrifikation des Abwassers in der Filterschicht 6 ermöglicht. Zur Einstellung des Verhältnisses der Wirbelzone 5 zur strömungsarmen Zone 6 ist ein Leitblech 11 vorgesehen, das entsprechend des gewünschten Verhältnisses in horizontaler Richtung verschiebbar ist. Die Regenerierung der Filterschicht 6 erfolgt in analoger Weise zu den Ausführungen bezüglich Figur 1.

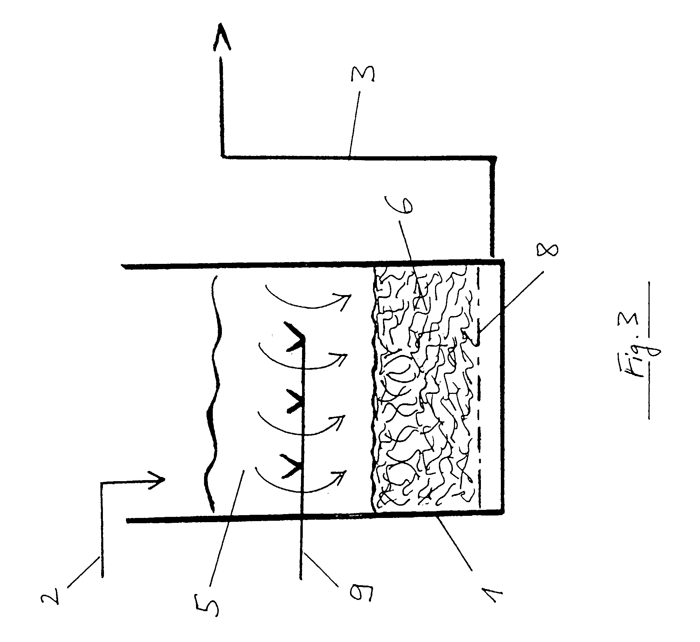

Figur 3 betrifft eine vertikal durchströmte Filtrationseinheit mit einem Behälter 1, der einen Flüssigkeitszulauf 2 und einen Flüssigkeitsablauf 3 aufweist. Oberhalb des Bodens des Behälters 1 ist eine als Lochblech 8 ausgebildete Rückhalteeinrichtung vorgesehen. Oberhalb des Lochblechs 8 bildet sich ab einer gewissen Flächenbeschickung in einer strömungsarmen Zone vor dem Lochblech 8 eine stationäre Filterschicht 6 aus losen Filterteilchen auf. Oberhalb dieser stationären Filterschicht wird eine Wirbelzone 5 aufrechterhalten, die mittels einer Belüftungseinrichtung 9 belüftet wird. Diese belüftete Wirbelzone 5 kann als aerobe Biozone beispielsweise zur Nitrifikation von Abwasser eingesetzt werden. Wie in den Figuren 1 und 2 beschrieben, werden als Filtermedium Teilchen mit einem spezifischen Gewicht von höchstens 1 g/ml, vorzugsweise mit flächiger, folienähnlicher Struktur, verwendet. Bei der in Figur 3 gezeigten Ausführungsform der Erfindung ist es besonders vorteilhaft, sowohl für die strömungsarme Zone als auch für die Wirbelzone flächige, folienähnliche Teilchen zu verwenden. Auf diese Weise kommt es während des Betriebs zu einem Austausch von Filterteilchen und Trägerteilchen. Die Regenerierung der Filterschicht 6 erfolgt in analoger Weiser zu den in Figur 1 und Figur 2 beschriebenen Verfahren.

## Patentansprüche

1. Verfahren zur Reinigung von feststoffhaltigen Flüssigkeiten in einem einen Zulauf (2) und Ablauf (3) aufweisenden Behälter (1), der lose Filterteilchen enthält, welche mittels einer Rückhalteeinrichtung (8) vom Ablauf (3) zurückgehalten werden, wobei in Strömungsrichtung der Flüssigkeit unmittelbar vor der Rückhalteeinrichtung (8) eine strömungsarme Zone (6) und in Strömungsrichtung der Flüssigkeit vor dieser strömungsarmen Zone eine Wirbelzone (5) ausgebildet werden
und wobei eine solche Flächenbeschickung der Flüssigkeit eingestellt wird, dass in der strömungsarmen Zone (6) eine statische Filterschicht aus den Filterteilchen aufrechterhalten wird,
und wobei Filterteilchen mit einem spezifischen Gewicht von höchstens 1 g/ml eingesetzt werden,
**dadurch gekennzeichnet**, dass Filterteilchen mit flächiger folienähnlicher Struktur verwendet werden.

2. Verfahren nach Anspruch 1, **dadurch gekennzeichnet**, dass ein Verhältnis des Volumens der Wirbelzone (5) zum Volumen der strömungsarmen Zone (6) von ca. 1 bis ca. 10 eingestellt wird.

3. Verfahren nach Anspruch 1 oder 2, **dadurch gekennzeichnet**, dass eine Flächenbeschickung von mindestens 5 m/h, vorzugsweise 5 bis 50 m/h eingestellt wird.

4. Verfahren nach einem der Ansprüche 1 bis 3, **dadurch gekennzeichnet**, dass in der Wirbelzone (5) Trägerteilchen (10) als Aufwuchsfläche für Biomasse eingesetzt werden.

5. Verfahren nach einem der Ansprüche 1 bis 4, **dadurch gekennzeichnet**, dass die Wirbelzone (5) mit einem sauerstoffhaltigen Gas begast wird.

6. Verfahren nach einem der Ansprüche 1 bis 5, **dadurch gekennzeichnet**, dass in die strömungsarme Zone (6) eine Kohlenstoffquelle zur Denitrifikation eingeführt wird.

7. Verfahren nach einem der Ansprüche 1 bis 6, **dadurch gekennzeichnet,** dass das Verhältnis von Wirbelzone (5) zu strömungsarmer Zone (6) durch Verschieben eines zwischen den beiden Zonen angeordneten Leitblechs (11) eingestellt wird.

8. Verfahren nach einem der Ansprüche 1 bis 7, **dadurch gekennzeichnet**, dass die Wirbelströmung der Wirbelzone (5) durch Einleiten eines Gases bewirkt wird.

9. Verfahren nach einem der Ansprüche 1 bis 7, **dadurch gekennzeichnet**, dass die Wirbelströmung der Wirbelzone (5) durch Einspeisen des Flüssigkeitszulaufs über einen Strahl- oder Injektorbelüfter bewirkt wird.

10. Verfahren nach Anspruch 1, **dadurch gekennzeichnet**, dass als Filterteilchen im Wesentlichen planare Teilchen mit einer Dicke von ca. 5 µm bis ca. 1.500 µm und einer Fläche von ca. 5 (mm)² bis ca. 1000 (mm)² verwendet werden.

11. Verfahren nach einem der Ansprüche 1 bis 10, **dadurch gekennzeichnet**, dass Filterteilchen verwendet werden, die an der Oberfläche ein thermisch geglättetes Vließmaterial mit einer Mikro-Restvließstruktur aufweisen.

12. Verfahren nach einem der Ansprüche 1 bis 11, **dadurch gekennzeichnet**, dass Filterteilchen verwendet werden, die an der Oberfläche ein thermisch geglättetes Vließmaterial aufweisen, welches filamentöse Verästelungen mit Filamentdurchmessern im Bereich von 5 bis 500 µm und Durchtrittsöffnungen im Bereich von 1 bis 1000 µm besitzt.

13. Verfahren nach einem der Ansprüche 1 bis 12, **dadurch gekennzeichnet**, dass zum Regenerieren der Filterschicht der Zulauf (2) und der Ablauf (3) des Behälters (1) abgesperrt werden, während die Wirbelzone (5) weiterhin betrieben wird, wobei sich die Filterschicht ablöst und in einzelne Filterteilchen verwirbelt wird, wodurch die in der Filterschicht gespeicherten Feststoffe freigesetzt werden, die mit den freigesetzten Feststoffen beladene Flüssigkeit aus dem Behälter (1) abgelassen wird und der Behälter (1) wieder mit frischer Flüssigkeit befüllt wird.

## Claims

1. A process for the purification of liquids containing solids in a container (1) comprising an inlet (2) and an outlet (3), which contains loose particles which are withheld from the outlet (3) by means of a retaining device (8),
whereby a weak-flow zone (6) is formed in the direction of flow of the liquid directly upstream of the retaining device (8) and a vortex zone (5) is formed in the direction of flow of the liquid upstream of said weak-flow zone
and whereby a surface loading of the liquid is adjusted such that a static filter layer consisting of the filter particles is maintained in the weak-flow zone (6),
and whereby filter particles having a specific weight of at most 1 g/ml are employed,
**characterised in that** use is made of filter particles having a plane film-like structure.

2. Process according to Claim 1, **characterised in that** a ratio of the volume of the vortex zone (5) to the volume of the weak-flow zone (6) of about 1 to about 10 is adjusted.

3. Process according to Claim 1 or 2, **characterised in that** a surface loading of at least 5 m/h, preferably 5 to 50 m/h, is adjusted.

4. Process according to one of Claims 1 to 3, **characterised in that** carrier particles (10) are employed in the vortex zone (5) by way of growth surface for biomass.

5. Process according to one of Claims 1 to 4, **characterised in that** the vortex zone (5) is gassed with an oxygenous gas.

6. Process according to one of Claims 1 to 5, **characterised in that** a carbon source for the purpose of denitrification is introduced into the weak-flow zone (6).

7. Process according to one of Claims 1 to 6, **characterised in that** the ratio of vortex zone (5) to weak-flow zone (6) is adjusted by displacing a baffle plate (11) arranged between the two zones.

8. Process according to one of Claims 1 to 7, **characterised in that** the vortex flow of the vortex zone (5) is brought about by introduction of a gas.

9. Process according to one of Claims 1 to 7, **characterised in that** the vortex flow of the vortex zone (5) is brought about by feeding in the inflow of liquid via a jet aerator or injector aerator.

10. Process according to Claim 1, **characterised in that** substantially planar particles having a thickness from about 5 µm to about 1,500 µm and an area from about 5 (mm)² to about 1,000 (mm)² are used as filter particles.

11. Process according to one of Claims 1 to 10, **characterised in that** use is made of filter particles that exhibit on their surface a thermally smoothed fleece material with a microscopic residual-fleece structure.

12. Process according to one of Claims 1 to 11, **characterised in that** use is made of filter particles that exhibit on their surface a thermally smoothed fleece material possessing filamentous ramifications with filament diameters in the range from 5 to 500 µm and passage openings in the range from 1 to 1,000 µm.

13. Process according to one of Claims 1 to 12, **characterised in that** with a view to regenerating the filter layer the inlet (2) and the outlet (3) of the container (1) are shut off while the vortex zone (5) continues to be operated, whereby the filter layer is detached and is vortexed into individual filter particles, as a result of which the solids stored in the filter layer are released, the liquid which is loaded with the released solids is discharged from the container (1), and the container (1) is refilled with fresh liquid.

## Revendications

1. Procédé d'épuration de liquides contenant des solides, dans un récipient (1) présentant une alimentation (2) et une évacuation (3), récipient contenant des particules filtrantes lâches, retenues à l'aide d'un dispositif de retenue (8) afin de les empêcher de passer à l'évacuation (3), une zone (6) à faible écoulement étant constituée, dans la direction d'écoulement de liquide, directement devant le dispositif de retenue (8), et une zone à tourbillonnement (5) étant réalisée, dans la direction d'écoulement du liquide, devant cette zone à faible écoulement,
et où une alimentation de la surface en liquide est réglée de manière qu'une couche filtrante statique, constituée des particules filtrantes, soit conservée dans la zone à faible écoulement (6),
et où sont utilisées des particules filtrantes d'un poids spécifique maximal de 1 g/ml,
caractérisé en ce qu'on utilise des particules filtrantes ayant une structure plate, analogue à une feuille.

2. Procédé selon la revendication 1, caractérisé en ce qu'on règle le rapport, entre le volume de la zone à tourbillonnement (5) et le volume de la zone à faible écoulement (6), à une valeur d'environ 1 à environ 10.

3. Procédé selon la revendication 1 ou 2, caractérisé en ce qu'on règle la vitesse d'alimentation de surface à une valeur d'au moins 5 m/h, de préférence 5 à 50 m/h.

4. Procédé selon l'une des revendications 1 à 3, caractérisé en ce qu'on utilise, dans la zone à tourbillonnement (5), des particules support (10) à titre de surfaces de croissance pour de la biomasse.

5. Procédé selon l'une des revendications 1 à 4, caractérisé en ce que la zone à tourbillonnement (5) est soumise à un passage de gaz, effectué avec un gaz contenant de l'oxygène.

6. Procédé selon l'une des revendications 1 à 5, caractérisé en ce que, dans la zone à faible écoulement (6), est introduite une source de carbone prévue pour une dénitrification.

7. Procédé selon l'une des revendications 1 à 6, caractérisé en ce que le rapport entre la zone à tourbillonnement (5) et la zone à faible écoulement est réglé par un déplacement d'une tôle de guidage (11) disposée entre les deux zones.

8. Procédé selon l'une des revendications 1 à 7, caractérisé en ce que l'écoulement tourbillonnaire de la zone à tourbillonnement (5) est provoqué par introduction d'un gaz.

9. Procédé selon l'une des revendications 1 à 7, caractérisé en ce que l'écoulement tourbillonnaire de la zone à tourbillonnement (5) est provoqué par une injection à l'amenée de liquide, par l'intermédiaire d'un aérateur à jet ou à injecteur.

10. Procédé selon la revendication 1, caractérisé en ce qu'on utilise comme particules filtrantes des particules pratiquement planes, d'une épaisseur 5 µm à environ 150 µm et d'une surface d'environ 5 (mm)² à environ 1000 (mm)².

11. Procédé selon l'une des revendications 1 à 10, caractérisé en ce qu'on utilise des particules filtrantes présentant un matériau formant voile ou formant matelas, lissé thermiquement sur la surface, doté d'une microstructure résiduelle de matelas.

12. Procédé selon l'une des revendications 1 à 11, caractérisé en ce qu'on utilise des particules filtrantes présentant un matériau formant voile ou formant matelas, lissé thermiquement sur la surface, ayant des ramifications filamenteuses avec des diamètres de filament dans la plage de 5 à 500 µm et des ouvertures de passage dans la plage de 1 à 1000 µm.

13. Procédé selon l'une des revendications 1 à 12, caractérisé en ce que, pour régénérer la couche filtrante, l'alimentation (2) et l'évacuation (3) du récipient (1) sont fermées, tandis que la zone à tourbillonnement (5) continue à fonctionner, la couche filtrante se désolidarisant et étant mise en tourbillonnement en particules filtrantes individuelles, faisant que les solides stockés dans la couche filtrante sont libérés, le liquide chargé par les solides libérés étant extrait du réservoir (1), et le réservoir (1) étant de nouveau rempli par du liquide neuf.
